# EUROPEAN PATENT SPECIFICATION

(11) **EP 4 054 314 B1**
(45) Date of publication and mention of the grant of the patent: **03.09.2025**
(21) Application number: 19835318.7
(22) Date of filing: 08.11.2019
(51) Int. Cl.: A01D 78/00

(54) **AGRICULTURAL RAKING MACHINE**
LANDWIRTSCHAFTLICHE RECHMASCHINE
MACHINE AGRICOLE ANDAINEUSE

(43) Date of publication of application: 14.09.2022
(73) Proprietor: Sitrex S.p.a., 06018 Città di Castello (PG) (IT)
(72) Inventor: MORTARO, Matteo, 06018 Citta' di Castello (PG) (IT); ROSSI, Pablo, 06018 Citta' di Castello (PG) (IT)
(74) Representative: Papa, Elisabetta
(86) International application number: PCT/IT2019/000095
(87) International publication number: WO 2021/090343

(56) References cited:
- EP-A1- 2 384 615
- DE-B1- 1 482 207
- GB-A- 2 210 242
- NL-A- 8 004 832
- US-A- 4 172 356

## Description

### Technical field of the invention

The present invention relates to an agricultural raking machine.

### Background

The agricultural raking machines, also called rakes or swath rakes, are used to collect in windrows the mowing or forage material or other residual material deriving from the activities of haymaking and/or the like.

The known raking machines are provided with a frame which can be towed by a vehicle, for example a tractor, along a forwarding direction. The frame carries a raking group usually equipped with one or more rotary combs. In use, the raking group is usually positioned along a direction tilted towards the forwarding direction. The combs, when they are put into rotation, act on the material on the ground by pushing it along the forwarding direction so as to accumulate it to form a strip of material, or otherwise called windrow.

The formation of the windrows is very important for haymaking since it affects directly the collection of the material to be kept, both in quantity and quality terms. A correct raking or swathing of the material on the ground provides for collecting as much quantity of material as possible and forming a windrow having sufficient material density along its length with the purpose of easing and performing a correct harvest by means of baling machines or the like.

To this purpose, the rotation speed of the combs affects the formation of a correct windrow. In particular, the rotation speed of the combs requires to be adjusted depending upon the type of the material to be collected and depending upon the level of humidity of the same.

It is known that a user can adjust the rotation speed before starting the raking procedures, by setting a predefined opening of the valves of the hydraulic system.

Such adjustment has to take place when the vehicle is still.

Should be necessary to adjust the speed during operation, the user is obliged to interrupt the raking procedures, to stop the vehicle, to get off and set a different opening level of the valves.

Consequently, the procedures for adjusting the rotation speed result to be uncomfortable and disadvantageous.

US4172356 discloses a raking mechanism is disclosed which comprises a side delivery raking means mounted on a frame having three support wheels.

### Summary of the invention

The technical problem placed and solved by the present invention is then to provide an agricultural raking machine allowing to obviate the drawbacks mentioned above with reference to known art.

Such problem is solved by an agricultural raking machine which can be closed like a basket according to claim 1.

Preferred features of the present invention are set forth in the depending claims.

The present invention provides some relevant advantages. The main advantage consists in that the machine of the present invention allows an easy and intuitive adjustment of the speed of the comb-like elements.

In particular, the speed adjustment can take place as the same time as the raking procedures, without the need for interruptions during working and without the need for manual adjustments of valves or other structural components.

In this way, the user can adapt the rotation speed of the combs during raking, so as to be able to intervene at the right time should the working conditions (material type, humidity, ground) require a variation in the speed of the comb-like elements.

Other advantages, features and use modes of the present invention will result evident from the following detailed description of some embodiments, shown by way of example and not for limitative purposes.

### Brief description of the figures

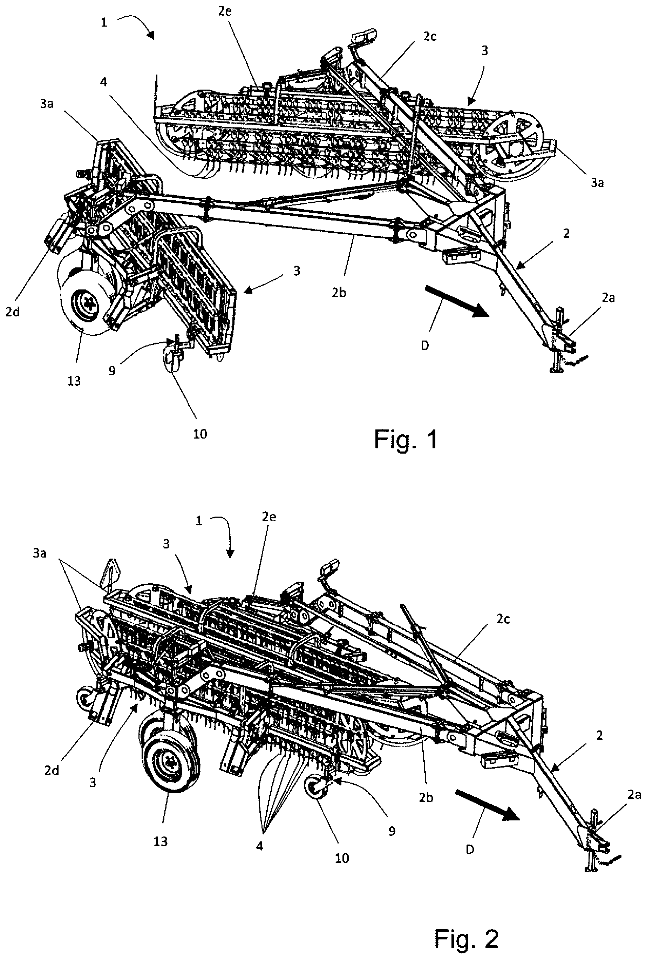

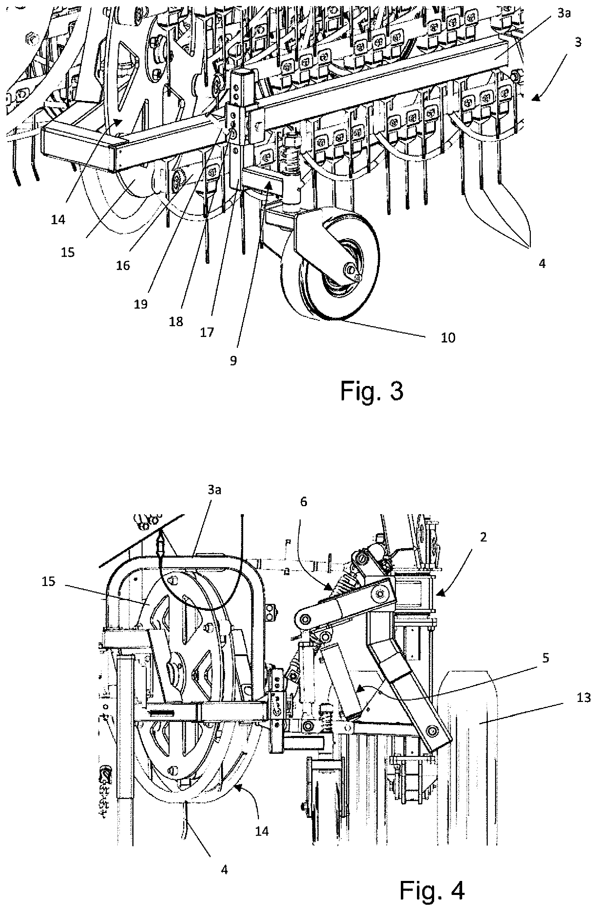

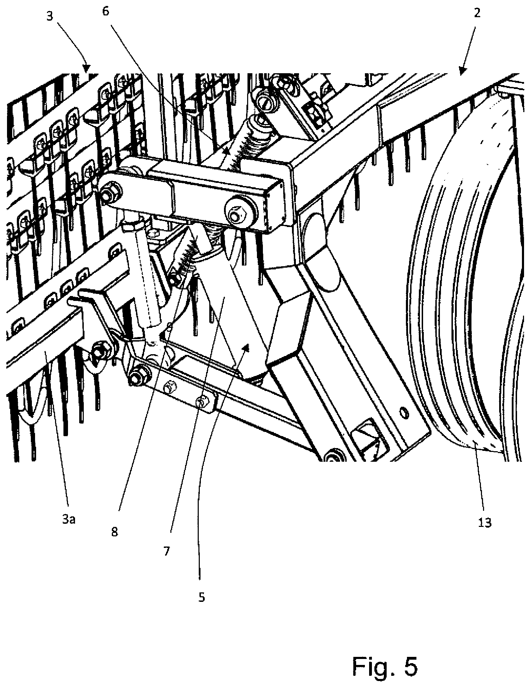

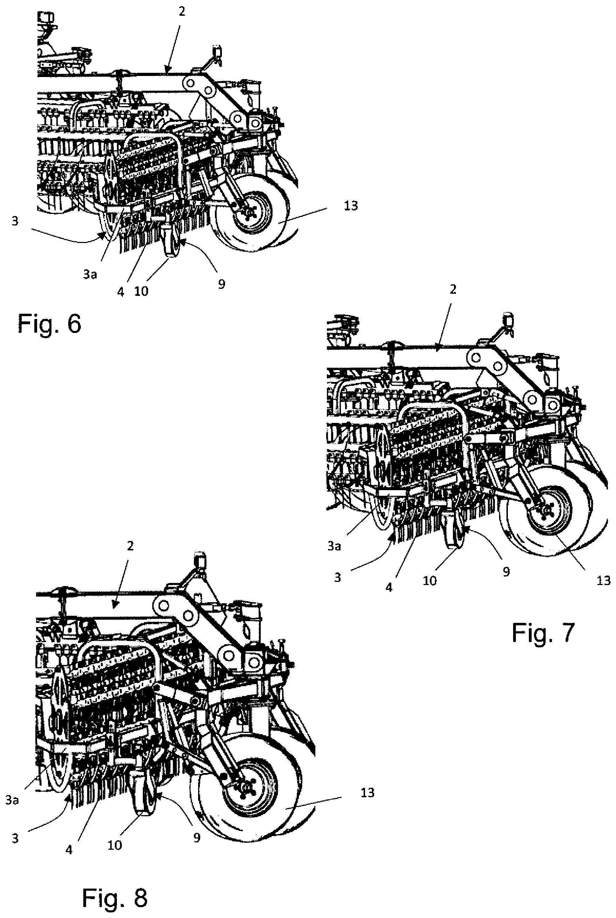

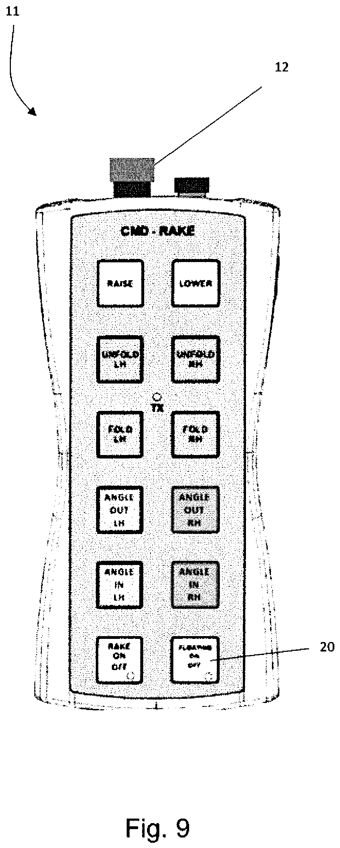

The figures of the enclosed drawings will be referred to, wherein:
▪ Figures 1 and 2 show an axonometric view of the machine in a preferred embodiment according to the present invention;
▪ Figures 3, 4 and 5 are axonometric views of details of the machine in a preferred embodiment according to the present invention;
▪ Figures 6, 7 and 8 are schematic views in axonometry of the operation of a detail of the machine according to the present invention;
▪ Figure 9 is a schematic view of a device of the machine according to the present invention.

The thicknesses and the bents represented in the above-illustrated figures are to be meant by way of example only, generally they are magnified and not necessarily shown in proportion.

### Detailed description of preferred embodiments

Embodiment and variants of the invention will be described hereinafter, and this with reference to the above-illustrated figures.

Analogous components are designated in the several figures with the same numeral reference.

In the following detailed description, additional embodiments and variants with respect to embodiments and variants already treated in the same description will be illustrated limited to the differences to what already illustrated.

Moreover, the several embodiments and variants described hereinafter are likely to be used in combination, if compatible.

By firstly referring to Figure 1, according to an embodiment of the invention an agricultural raking machine is designated as a whole with 1.

The machine 1 comprises a frame 2 configured to be towed by a towing vehicle, for example a tractor.

The frame 2 illustrated in figures is usefully provided with wheels 13 thereupon it rests to slide along a forwarding direction D.

Preferably, the frame 2 is provided with a rudder-like portion 2a configured to be connected to the towing vehicle.

By referring to figures, the frame 2 can include two arms 2b, 2c branching from the rudder-like portion 2a. The arms 2b and 2c are rotatable to one another, movable from a closing configuration (Figure 2) wherein they are substantially approached, to an opening configuration (Figure 1) wherein they are tilted to one another, converging towards the rudder-like portion 2a and defining an opening angle.

Usefully, the frame 2 can include even supports 2d and 2e, connected to the arms 2b and 2c, respectively.

The supports 2d and 2e preferably can be rotatable with respect to the arms 2b e 2c and they are rotatable independently from one another.

Alternative embodiments are not excluded, wherein the frame 2 has different shapes with respect to the one illustrated in figures.

Moreover, the machine 1 comprises at least a raking group 3 assembled on the frame 2. In particular, the raking group 3 is provided with rotating comb-like elements 4 apt to move material mowed onto the ground to form a windrow.

In the embodiment illustrated in figure, the machine 1 comprises two raking groups 3 installed on each arm 2b, 2c.

In particular, the raking groups 3 can be installed on each support 2d and 2e. Different embodiments from the illustrated one are not excluded, wherein there is a different number of raking groups 3.

Advantageously, the raking groups 3 can be tiltable with respect to the frame 2. With reference to the illustrated embodiment, the raking groups 3 can move vertically, and then orthogonally to the forwarding direction D, with respect to the supports 2d, 2e.

Moreover, the raking groups 3, since they are connected to the supports 2d and 2e, can be tiltable with respect to the arms 2b, 2c.

Preferably, the raking groups are movable between a working configuration (Figure 1) and a rest configuration (Figure 2).

In the working configuration, the raking groups 3 can be tilted with respect to the frame 2. In particular, the raking groups 3 can be tilted with respect to the respective arms 2b, 2c so as to arrange on diverging lines with respect to the forwarding direction D.

On the contrary, in the rest configuration, the raking groups 3 can be arranged substantially parallel to the forwarding direction D. In particular, the raking groups 3 can be arranged substantially parallel to the rudder-like portion 2a. The latter, in fact, has a longitudinal development, the projection thereof on the ground extends substantially parallel to the forwarding direction D.

The raking groups, then, can be rotated and brought in position parallel to the rudder-like portion 2a and with a minimum angle with respect to the respective arms 2b, 2c so as to define a compact configuration together with the frame 2.

Preferably, the raking group 3 can include a stiff structure 3a carrying the comb-like elements 4. The stiff structure 3a, can be usefully implemented with rod-like elements defining an open cage inside thereof the comb-like elements 4 are assembled.

Independently from the shape and configuration of the stiff structure 3a, the comb-like elements 4 are assembled on a rotating portion 14 associated to the same stiff structure 3a.

The rotating portion 14 comprises tilted disks 15 therefrom rods 16 extend, thereon the comb-like elements 4 are fastened. In working configuration, the rotating disks 15 can rotate, by dragging in rotary motion the comb-like elements 4.

Raking groups different from the described ones are not excluded, for example wherein the comb-like elements are dragged in motion by structures having a different configuration than the above-described one.

Usefully, the stiff structure 3a can include at least an element 9 in contact with the ground having a contact end 10 intended to slide on the ground. The comb-like elements 4 can be placed at a predetermined height with respect to the contact end 10.

Usefully, the contact element 9 can have an adjustable height. In this way a user can set the distance of the comb-like elements 4 from the ground based upon several factors such as the type of material to be collected, the type of ground and other peculiarities linked to the geographical area and to the climatic conditions.

Advantageously, the contact element 9 is substantially stiff. In this way, the stresses and the pushes received from the ground by means of the contact end 10 are transferred stiffly to the stiff structure 3a.

By referring to the embodiment shown in figures, the contact end 10 can be the sliding surface of a small wheel assembled on the contact element 9.

Usefully, the contact element 9 can include a bar 17 provided with a series of vertical holes spaced apart therebetween. Moreover, the contact element 9 can include a ring 18 fastened to the stiff structure 3a, perforated too, wherein the bar 17 can slide. The stiff connection between the bar 17 and the ring 18 can be guaranteed by means of a pin 19. By extracting the pin 19, the bar 17 can be slid with respect to the ring 18 by adjusting, consequently, the height of the contact element 9 with respect to the stiff structure 3a.

The machine can further include flotation means 5, 6 associated to the raking group 3 and to the frame 2. The configuration is so that, at variations in height from the ground, the raking group 3 raises/lowers with respect to the frame 2. Thanks to the flotation means 5, 6, at asperities of the ground or obstacles, the raking group 3 can slide relatively in height with respect to the frame 2, by keeping the distance between the comb-like elements 4 and the substantially constant ground. In this way the collection of the material results to be more effective and the risk results reduced that the comb-like elements 4 are likely to impact obstacles or the ground itself.

Preferably, the flotation means 5, 6 includes at least a flotation device 5. The flotation device 5 can usefully comprise a fixed portion 7 and a sliding portion 8 associated to the fixed portion 7 so as to slide with respect thereto.

The fixed portion 7 can be fastened to the frame 2, preferably to the supports 2d and 2e, whereas the sliding portion 8 can be fastened to the raking group 3. The raking group 3, then, can raise/lower with respect to the frame 2 by means of relative motions of the sliding portion 8 with respect to the fixed portion.

Advantageously, the flotation device 5 is of the type of a hydraulic actuation device 5, but alternative flotation devices are not excluded, such as, for example, hydraulic, or pneumatic or electro-magnetic actuation devices.

The hydraulic actuation device 5 can be provided with a working fluid, for example hydraulic oil or another fluid usable under pressure and known in the state of art. Usefully, the hydraulic actuation device 5 can be movable between a floating configuration, wherein the working fluid is free to slide, and a locking configuration, wherein the working fluid is kept under pressure.

By referring to the present embodiment, the hydraulic actuation device 5 can include:
- as fixed portion 7, a cylinder fastened to the frame 2 and provided with means for inletting the working fluid;
- as movable portion 8, a piston fastened to the raking group 3 and at least partially inserted in the cylinder 7 to interfere with the working fluid.

In floating configuration, the piston 8 can slide in the cylinder 7.

In floating configuration, then, the raking group 3 can raise/lower with respect to the frame 2 by sliding the piston 8 in the cylinder 7.

In particular, at asperities of the ground or variations in the slope, the contact element 9, through the contact end 10, varies in height by dragging the stiff structure 3a and, then, the raking group 3. The variations in height of the raking group 3 are not transmitted to the frame 2 since the piston 8 can slide freely in the cylinder 7.

On the contrary, in locking configuration, the pressure of the working fluid prevents the piston 8 from sliding in the cylinder 7, and the hydraulic actuation device results to be locked.

In this case, the variations in height of the raking group 3 are transmitted even to the frame 2 since the cylinder 7 and the piston 8 result to be a substantially stiff connection between the raking group and the frame 2.

Solutions are not excluded providing a plurality of hydraulic actuation devices 5. Solutions are not excluded too, providing alternatives technically equivalent to the piston 8 and to the cylinder 7.

Advantageously, the flotation means 5, 6 can include at least a spring element 6 fastened to the frame 2 and to the raking group 3. The spring element 6 can exert an approaching force between the raking group 3 and the frame 2. The action of the spring element gives a greater sensitivity to the flotation means 5, 6 since the force required to push the raking group 3 and to overcome the resistances due to the weight result to be lower. The force exerted by the spring element 6 is subtracted from the weight of the raking group 3, therefore the latter will more likely raise from the ground at asperities, obstacles and slope variations.

By referring to the present embodiment, the spring element 6 is fastened on one side to the frame 2, on the other side to the stiff structure 3a.

Solutions are not excluded providing a plurality of spring elements 6 fastened to the frame 2 and to the raking group 3.

Solutions are not excluded too, providing alternatives technically equivalent to the spring elements 6.

By referring to the present embodiment, the machine 1 can include a hydraulic actuation group. The hydraulic actuation group, for example, can include an electro-hydraulic control unit provided with connecting tubes wherein a working fluid can slide, and electro-valves configured to adjust the fluid flow rate in the tubes.

The hydraulic actuation group, for the same of simplicity not illustrated in figures, can be connected to all portions of the machine 1 which require to be actuated, for example the arms 2b, 2c and the supports 2d, 2e of the frame 2, or the raking groups 3. In the latter case, the connection is configured both to tilt, raise and lower the raking groups 3 with respect to the supports 2d and 2e, and to actuate in rotation the comb-like elements 4.

Usefully, the hydraulic actuation group can be operatively connected to the raking group 3.

Moreover, the hydraulic actuation group can be operatively connected to the flotation means 5, 6 for their activation/deactivation. It is necessary to specify that terms "activation/deactivation" and similar, are referred to the flotation means 5, 6 to designate the passage from the locking configuration to the floating configuration (activation) and vice-versa (deactivation).

Advantageously, the machine 1 can include at least a control device 11 therewith a user can control the operation of the machine 1.

Usefully the control device 11 can be accessible to a user even when the machine is operating 1.

Advantageously, the control device 11 can include control means operatively connected to the hydraulic actuation group and apt to adjust the operation of the same actuation group.

Preferably, the control means can include a flow rate adjustment element 12 operatively connected to the hydraulic actuation group. The adjustment element 12 is configured to adjust the flow rate of working fluid in the hydraulic actuation group. Usefully, the adjustment element 12 is configured to adjust the flow rate of the working fluid directed to the raking group 3 to actuate in rotation the comb-like elements.

In this way, a user can adjust the rotation speed of the comb-like elements 4 by means of the control device 11. Thanks to the remote control, the speed adjustment results to be simpler and it does not require direct interventions on the hydraulic actuation group, for example adjustments of valves to be done directly on the electro-hydraulic control unit.

Thanks to the adjustment element 12, then, it is possible to vary the speed during the collection procedures, without interrupting the work to be done, with consequent saving in time and resources.

Advantageously, the flow rate adjustment element 12 can be of the type of a potentiometer. By acting on the potentiometer, it is possible to vary the fluid flow rate supplied to the comb-like elements 4, by increasing or decreasing the rotation speed thereof.

Advantageously the flow rate adjustment element 12 can be manually actuated. In this way the user can adjust *live,* during the operation of the machine, the rotation speed of the combs depending upon the proceeding state of the raking procedures, by increasing or decreasing the speed based upon one's experience.

Preferably, the potentiometer is of rotative type, so that the flow rate, ergo the rotation speed of the comb-like elements 4, varies depending upon a rotation of the adjustment element 12. Consequently, the adjustment results to be simple and intuitive for the user.

Preferably, the control device 11 is connected to the flotation means 5, 6 and configured to activate/deactivate hydraulically the same flotation means.

In particular, the control device 11 is connected to the hydraulic actuation device 5 ed is configured to control the passage from the floating configuration to the locking configuration and vice-versa.

Advantageously, the control device 11 can include a switch element 20 operatively connected to the hydraulic actuation group for the selective actuation of the flotation means 5, 6, in particular for the activation/deactivation of the hydraulic actuation device 5.

The switch element 20 can be connected to the hydraulic actuation group so as to control the passage from the locking configuration to the floating configuration, for example by means of the electric control of an electro-valve operatively connected to the hydraulic actuation device 5.

Figure 9 illustrates by way of example a control device 11 comprising a grasping body 21 provided with a plurality of switches operatively connected to the hydraulic actuation group. Each switch is configured to control a procedure by means of the hydraulic actuation group. Each corresponding procedure is shown with alphanumeric wordings in the box of each switch. By way of example, the actions controlled by the switches and the relative alphanumeric codes are the following ones:
- *raise*: raising action of the raking group 3;
- *lower*: lowering action of the raking group 3;
- *unfold LH*: opening arm 2c (left);
- *unfold RH*: opening arm 2b (right);
- *fold LH*: closing arm 2c (left);
- *fold RH*: closing arm 2b (right);
- *angle out LH*: angular opening support 2e (left);
- *angle out RH*: angular opening support 2d (right);
- *angle in LH*: angular closing support 2e (left);
- *angle in RH*: angular closing support 2d (right);
- *rake on*/*off*: switch for actuating comb-like elements 4;
- *floating on*/*off*: switch for actuating flotation means 5, 6, in particular for actuating the hydraulic actuation device 5.

The control device 11 can be usefully configured to communicate electrically with the control unit of the actuating group, which, in turn, controls the electro-valves and the fluid flow rates required to perform the above-mentioned procedures.

For example, the control device 11 is configured to actuate the comb-like elements 4.

In particular, by pressing the switch *"rake on*/*off*" it is possible to put in rotation the comb-like elements 4.

Alternative solutions are not excluded wherein, for example, the control device 11 comprises an electronic interface configured for a digital actuation of the switches and of the flow rate adjustment element 12.

An alternative embodiment, but compatible and combinable to the previously described one, provides a machine 1 wholly analogous to the above-described one, but without the flotation elements 5, 6. The control device 11, in this case, will be without the *"floating on*/*off"* switch. The machine 1, according to this alternative embodiment, results simpler to be implemented.

Other embodiments, compatible and combinable with the previously described ones, can provide control devices 11 comprising radiofrequency transmission means for remotely controlling the operation group.

The present invention has been sofar described with reference to preferred embodiments. It is to be meant that other embodiments may exist belonging to the same inventive core, as defined by the protective scope of the herebelow reported claims.

## Claims

1. An agricultural raking machine (1) comprising
- a frame (2) configured to be towed by a towing vehicle;
- at least a raking group (3) assembled on said frame (2) and provided with rotating comb-like elements (4) apt to move material mowed onto the ground to form a windrow;
- a control device (11) operatively connected to said raking group (3) and configured to adjust the rotation speed of said comb-like elements (4),
- a hydraulic actuation group operatively connected to at least said raking group (3) and configured to put in rotation said comb-like elements (4), said control device (11) comprising control means operatively connected to said hydraulic actuation group,
the agricultural raking machine being **characterized in that** said control means comprises a flow rate adjustment element (12) operatively connected to said hydraulic actuation group to adjust the flow rate of a working fluid in said hydraulic actuation group and said flow rate adjustment element (12) is of the type of a potentiometer,
wherein said control devices (11) comprises radiofrequency transmission means for remotely controlling the actuation group.

2. The machine (1) according to one or more of the preceding claims, wherein said flow rate adjustment element (12) is manually actuated.

3. The machine (1) according to one or more of the preceding claims, comprising flotation means (5, 6) associated to said raking group (3) and to said frame (2), the configuration being so that, at variations in height from the ground, said raking group (3) raises/lowers with respect to said frame (2).

4. The machine (1) according to claim 3, wherein said flotation means (5, 6) comprises at least a flotation device (5) comprising a fixed portion (7) and a sliding portion (8) associated to said fixed portion (7).

5. The machine (1) according to the preceding claim, wherein said flotation device (5) is of the type of a hydraulic actuation device (5) provided with a working fluid, said hydraulic actuation device (5) being movable between a floating configuration, wherein said working fluid is free to slide, and a locking configuration, wherein said working fluid is kept in pressure.

6. The machine (1) according to claim 5, wherein said hydraulic actuation device (5) comprises
- a cylinder (7) fastened to said frame (2) and provided with means for inletting said working fluid;
- a piston (8) fastened to said raking group and at least partially inserted in said cylinder to interfere with said working fluid;
in said floating configuration, said piston (8) being able to slide in said cylinder (7).

7. The machine (1) according to anyone of the preceding claims, wherein said flotation means (5, 6) comprises at least a spring element (6) fastened to said frame (2) and to said raking group (3) and exerting an approaching force between said raking group (3) and said frame (2).

8. The machine (1) according to one or more of the preceding claims, wherein said raking group (3) comprises a stiff structure (3a) carrying said comb-like elements (4).

9. The machine (1) according to claim 8, wherein said stiff structure (3a) comprises at least a contact element (9) in contact with the ground having a contact end (10) intended to slide on the ground, said comb-like elements (4) being placed at a predetermined height with respect to said contact end (10).

10. The machine (1) according to claim 9, wherein said contact element (9) has adjustable height.

11. The machine (1) according to claim 9 or 10, wherein said contact element (9) is substantially stiff.

12. The machine (1) according to one or more of the preceding claims, comprising at least a control device (11) connected to said flotation means (5, 6) and configured to activate/deactivate hydraulically said flotation means.

13. The machine (1) according to one or more of the preceding claims, wherein said hydraulic actuation group is operatively connected to at least said raking group (3) and connected to said flotation means (5, 6).

14. The machine (1) according to one or more of the preceding claims, wherein said control device (11) comprises a switch element (20) operatively connected to said hydraulic actuation group for the selective actuation of said flotation means (5).

## Patentansprüche

1. Landwirtschaftliche Rechenmaschine (1), umfassend
- einen Rahmen (2), der konfiguriert ist, um durch eine Zugmaschine gezogen zu werden;
- mindestens eine Rechengruppe (3), die auf dem Rahmen (2) montiert ist und mit rotierenden kammartigen Elementen (4) bereitgestellt ist, die geeignet sind, gemähtes Material auf den Boden zu bewegen, um eine Schwade auszubilden;
- eine Steuervorrichtung (11), die mit der Rechengruppe (3) wirkverbunden ist und konfiguriert ist, um die Rotationsgeschwindigkeit der kammartigen Elemente (4) einzustellen,
- eine hydraulische Betätigungsgruppe, die mit mindestens der Rechengruppe (3) wirkverbunden ist und konfiguriert ist, um die kammartigen Elemente (4) in Rotation zu versetzen, die Steuervorrichtung (11) umfassend ein Steuermittel, das mit der hydraulischen Betätigungsgruppe wirkverbunden ist,
wobei die landwirtschaftliche Rechenmaschine **dadurch gekennzeichnet ist, dass** das Steuermittel ein Durchflussmengeneinstellelement (12) umfasst, das mit der hydraulischen Betätigungsgruppe wirkverbunden ist, um die Durchflussrate eines Arbeitsfluids in der hydraulischen Betätigungsgruppe einzustellen, und das Durchflussmengeneinstellelement (12) von dem Typ eines Potentiometers ist,
wobei die Steuervorrichtung (11) ein Hochfrequenzübertragungsmittel zum Fernsteuern der Betätigungsgruppe umfasst.

2. Maschine (1) nach einem oder mehreren der vorstehenden Ansprüche, wobei das Durchflussmengeneinstellelement (12) manuell betätigt wird.

3. Maschine (1) nach einem oder mehreren der vorstehenden Ansprüche, umfassend ein Schwimmmittel (5, 6), das mit der Rechengruppe (3) und mit dem Rahmen (2) verknüpft ist, wobei die Konfiguration so ist, dass sich die Rechengruppe (3) bei Höhenunterschieden von dem Boden in Bezug auf den Rahmen (2) hebt/senkt.

4. Maschine (1) nach Anspruch 3, wobei das Schwimmmittel (5, 6) mindestens eine Schwimmvorrichtung (5) umfasst, umfassend einen fixierten Abschnitt (7) und einen gleitenden Abschnitt (8), der mit dem fixierten Abschnitt (7) verknüpft ist.

5. Maschine (1) nach dem vorstehenden Anspruch, wobei die Schwimmvorrichtung (5) von dem Typ einer hydraulischen Betätigungsvorrichtung (5) ist, die mit einem Arbeitsfluid bereitgestellt ist, wobei die hydraulische Betätigungsvorrichtung (5) zwischen einer schwimmenden Konfiguration, wobei das Arbeitsfluid frei ist, um zu gleiten, und einer Verriegelungskonfiguration bewegbar ist, wobei das Arbeitsfluid unter Druck gehalten wird.

6. Maschine (1) nach Anspruch 5, wobei die hydraulische Betätigungsvorrichtung (5) umfasst
- einen Zylinder (7), der an dem Rahmen (2) befestigt ist und mit einem Mittel zum Einlassen des Arbeitsfluids bereitgestellt ist;
- einen Kolben (8), der an der Rechengruppe befestigt ist und mindestens teilweise in den Zylinder eingesetzt ist, um das Arbeitsfluid zu beeinträchtigen;
wobei der Kolben (8) in der schwimmenden Konfiguration in der Lage ist, in dem Zylinder (7) zu gleiten.

7. Maschine (1) nach einem der vorstehenden Ansprüche, wobei das Schwimmmittel (5, 6) mindestens ein Federelement (6) umfasst, das an dem Rahmen (2) und an der Rechengruppe (3) befestigt ist und eine Annäherungskraft zwischen der Rechengruppe (3) und dem Rahmen (2) ausübt.

8. Maschine (1) nach einem oder mehreren der vorstehenden Ansprüche, wobei die Rechengruppe (3) eine steife Struktur (3a) umfasst, die die kammartigen Elemente (4) trägt.

9. Maschine (1) nach Anspruch 8, wobei die steife Struktur (3a) mindestens ein Kontaktelement (9) in Kontakt mit dem Boden umfasst, das ein Kontaktende (10) aufweist, das vorgesehen ist, um auf dem Boden zu gleiten, wobei die kammartigen Elemente (4) in einer zuvor bestimmten Höhe in Bezug auf das Kontaktende (10) platziert sind.

10. Maschine (1) nach Anspruch 9, wobei das Kontaktelement (9) eine einstellbare Höhe aufweist.

11. Maschine (1) nach Anspruch 9 oder 10, wobei das Kontaktelement (9) im Wesentlichen steif ist.

12. Maschine (1) nach einem oder mehreren der vorstehenden Ansprüche, umfassend mindestens eine Steuervorrichtung (11), die mit dem Schwimmmittel (5, 6) verbunden ist und konfiguriert ist, um das Schwimmmittel hydraulisch zu aktivieren/deaktivieren.

13. Maschine (1) nach einem oder mehreren der vorstehenden Ansprüche, wobei die hydraulische Betätigungsgruppe mit mindestens der Rechengruppe (3) wirkverbunden und mit dem Schwimmmittel (5, 6) verbunden ist.

14. Maschine (1) nach einem oder mehreren der vorstehenden Ansprüche, wobei die Steuervorrichtung (11) ein Schaltelement (20), das mit der hydraulischen Betätigungsgruppe wirkverbunden ist, für die selektive Betätigung des Schwimmmittels (5) umfasst.

## Revendications

1. Machine agricole andaineuse (1) comprenant
- un cadre (2) conçu pour être remorqué par un véhicule tracteur ;
- au moins un groupe andaineur (3) assemblé sur ledit cadre (2) et pourvu d'éléments rotatifs en forme de peigne (4) aptes à déplacer la matière fauchée sur le sol pour former un andain ;
- un dispositif de commande (11) relié de manière fonctionnelle au groupe de andaineur (3) et configuré pour régler la vitesse de rotation des éléments en forme de peigne (4),
- un groupe d'actionnement hydraulique relié de manière fonctionnelle à au moins ledit groupe andaineur (3) et conçu pour mettre en rotation lesdits éléments en forme de peigne (4), ledit dispositif de commande (11) comprenant des moyens de commande reliés de manière fonctionnelle audit groupe d'actionnement hydraulique,
la machine agricole andaineuse étant **caractérisée en ce que** ledit moyen de commande comprend un élément de réglage de débit (12) relié de manière fonctionnelle audit groupe d'actionnement hydraulique pour régler le débit d'un fluide de travail dans ledit groupe d'actionnement hydraulique et ledit élément de réglage de débit (12) est du type d'un potentiomètre,
dans laquelle lesdits dispositifs de commande (11) comprennent un moyen de transmission par radiofréquence pour commander à distance le groupe d'actionnement.

2. Machine (1) selon l'une ou plusieurs des revendications précédentes, dans laquelle ledit élément de réglage de débit (12) est actionné manuellement.

3. Machine (1) selon l'une ou plusieurs des revendications précédentes, comprenant des moyens de flottaison (5, 6) associés audit groupe andaineur (3) et audit cadre (2), la configuration étant telle que, lors de variations de hauteur par rapport au sol, ledit groupe andaineur (3) se soulève/s'abaisse par rapport audit cadre (2).

4. Machine (1) selon la revendication 3, dans laquelle lesdits moyens de flottaison (5, 6) comprennent au moins un dispositif de flottaison (5) comprenant une partie fixe (7) et une partie glissante (8) associée à ladite partie fixe (7).

5. Machine (1) selon la revendication précédente, dans laquelle ledit dispositif de flottaison (5) est du type d'un dispositif d'actionnement hydraulique (5) pourvu d'un fluide de travail, ledit dispositif d'actionnement hydraulique (5) étant mobile entre une configuration flottante, dans laquelle ledit fluide de travail est libre de glisser, et une configuration de verrouillage, dans laquelle ledit fluide de travail est maintenu sous pression.

6. Machine (1) selon la revendication 5, dans laquelle ledit dispositif d'actionnement hydraulique (5) comprend
- un cylindre (7) fixé audit cadre (2) et pourvu d'un moyen d'admission dudit fluide de travail ;
- un piston (8) fixé audit groupe andaineur et au moins partiellement inséré dans ledit cylindre pour interférer avec ledit fluide de travail ;
dans ladite configuration flottante, ledit piston (8) pouvant glisser dans ledit cylindre (7).

7. Machine (1) selon l'une quelconque des revendications précédentes, dans laquelle lesdits moyens de flottaison (5, 6) comprennent au moins un élément à ressort (6) fixé audit cadre (2) et audit groupe andaineur (3) et exerçant une force d'approche entre ledit groupe andaineur (3) et ledit cadre (2).

8. Machine (1) selon l'une ou plusieurs des revendications précédentes, dans laquelle ledit groupe andaineur (3) comprend une structure rigide (3a) portant lesdits éléments en forme de peigne (4).

9. Machine (1) selon la revendication 8, dans laquelle ladite structure rigide (3a) comprend au moins un élément de contact (9) en contact avec le sol ayant une extrémité de contact (10) destinée à glisser sur le sol, lesdits éléments de type peigne (4) étant placés à une hauteur prédéterminée par rapport à ladite extrémité de contact (10).

10. Machine (1) selon la revendication 9, dans laquelle ledit élément de contact (9) a une hauteur réglable.

11. Machine (1) selon la revendication 9 ou 10, dans laquelle ledit élément de contact (9) est sensiblement rigide.

12. Machine (1) selon l'une ou plusieurs des revendications précédentes, comprenant au moins un dispositif de commande (11) connecté auxdits moyens de flottaison (5, 6) et configuré pour activer/désactiver hydrauliquement lesdits moyens de flottaison.

13. Machine (1) selon l'une ou plusieurs des revendications précédentes, dans laquelle ledit groupe d'actionnement hydraulique est relié de manière fonctionnelle à au moins ledit groupe andaineur (3) et connecté auxdits moyens de flottaison (5, 6).

14. Machine (1) selon l'une ou plusieurs des revendications précédentes, dans laquelle ledit dispositif de commande (11) comprend un élément de commutation (20) relié de manière fonctionnelle audit groupe d'actionnement hydraulique pour l'actionnement sélectif dudit moyens de flottaison (5).
